**Europäisches Patentamt**

**European Patent Office**

**Office européen des brevets**

(11) Veröffentlichungsnummer: **0 466 058 A1**

# EUROPÄISCHE PATENTANMELDUNG

(21) Anmeldenummer: **91111253.0**

(22) Anmeldetag: **05.07.91**

(51) Int. Cl.5: **G11B 7/12**, G11B 7/08

(30) Priorität: **11.07.90 DE 4022095**

(43) Veröffentlichungstag der Anmeldung:
**15.01.92 Patentblatt 92/03**

(84) Benannte Vertragsstaaten:
**AT BE CH DE DK ES FR GB GR IT LI LU NL SE**

(71) Anmelder: **DEUTSCHE THOMSON-BRANDT GMBH**

**W-7730 Villingen-Schwenningen(DE)**

(72) Erfinder: **Kühn, Hans-Robert**
**Haydnweg 9**
**W-7742 St. Georgen(DE)**

(54) **Vorrichtung zum optischen Lesen und Aufzeichnen von Daten.**

(57) Unter dem Liesst-Effekt versteht man den übergang vom Low-Spin-Zustand in den High-Spin-Zustand, der bei vielen Übergangsmetallverbindungen mit einem charakteristischen Farbwechsel verbunden ist. Durch Bestrahlung mit Licht geeigneter Wellenlänge wird der übergang vom einen Spin-Zustand in den anderen bewirkt und wieder rückgängig gemacht.

Eine von mehreren Lichtquellen (L1, L2, L3) unterschiedlicher Wellenlänge ist wahlweise vor dem Eingang einer optischen Anordnung positionierbar, die den Lichtstrahl dieser Lichtquelle auf einen Aufzeichnungsträger (AT) fokussiert. Der Aufzeichnungsträger (AT) reflektiert das von der Lichtquelle ausgestrahlte Licht auf einen Photodetektor. Die Lichtquellen (L1, L2, L3) können z.B. auf einem gemeinsamen Träger sitzen, der als Schiene (S1), drehbare Scheibe oder Trommel ausgeführt ist.

Fig.1

Die Erfindung betrifft eine Vorrichtung zum optischen Lesen und Aufzeichnen von Daten unter Ausnutzung des Liesst-Effektes, bei der ein Lichtstrahl einer Lichtquelle, die am Eingang einer optischen Anordnung vorgesehen ist, auf einen Aufzeichnungsträger mittels der optischen Anordnung fokussiert und vom Aufzeichnungsträger auf einen am Ausgang der optischen Anordnung vorgesehenen Photodetektor reflektiert wird.

Unter dem Liesst-Effekt - die Abkürzung für Light Induced Excited Spin State Trapping - der bei Übergangsmetallverbindungen beobachtet wird, versteht man die Änderung des Spin-Zustandes in Abhängigkeit von der Temperatur. Beim Übergang von tiefer Temperatur zu hoher Temperatur geht bei einer kritischen Temperatur der Low-Spin-Zustand in den High-Spin-Zustand über, der bei vielen Übergangsmetallverbindungen mit einem plötzlichen charakteristischen Farbwechsel verbunden ist.

Unterhalb der kritischen Temperatur läßt sich dieser mit einem Farbwechsel verbundene Übergang des Spin-Zustandes aber auch durch Einstrahlung von Licht erzielen. Ebenso läßt sich der Farbwechsel durch Bestrahlung mit Licht geeigneter Wellenlänge wieder rückgängig machen.

Es ist daher möglich, mit Licht einer ersten geeigneten Wellenlänge den Übergang vom Low-Spin-Zustand in den High-Spin-Zustand mit dem zugehörenden charakteristischen Farbwechsel zu bewirken; ebenso lassen sich mit Licht einer zweiten geeigneten Wellenlänge der übergang vom High-Zustand in den Low-Zustand und der damit verbundene Farbwechsel erzielen. Es sind plattenförmige Aufzeichnungsträger bekannt, die den Liesst-Effekt zeigen.

Aufgabe der Erfindung ist es nun, eine einfache Vorrichtung zum optischen Aufzeichnen und Lesen von Daten für einen Aufzeichnungsträger anzugeben, der den Liesst-Effekt zeigt.

Die Erfindung löst diese Aufgabe dadurch, daß wahlweise eine von mehreren Lichtquellen unterschiedlicher Wellenlänge vor dem Eingang der optischen Anordnung positionierbar ist, damit auf den Aufzeichnungsträger Licht unterschiedlicher Wellenlänge zum Lesen, Aufzeichnen oder Löschen von Daten gestrahlt werden kann.

Es zeigen

Figur 1    ein erstes Ausführungsbeispiel
Figur 2    ein zweites Ausführungsbeispiel
Figur 3    ein drittes Ausführungsbeispiel
Figur 5    ein fünftes Ausführungsbeispiel
Figur 6    ein sechstes Ausführungsbeispiel
          der Erfindung.

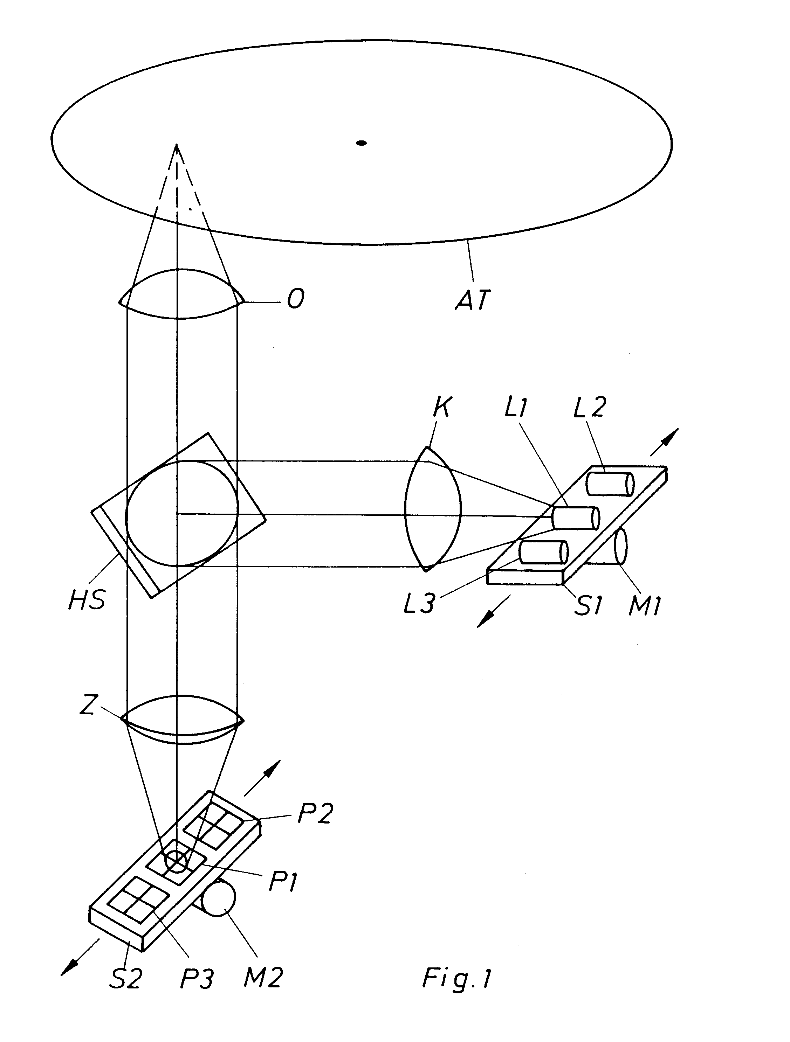

Anhand des ersten in Figur 1 abgebildeten Ausführungsbeispiels wird die Erfindung beschrieben und erläutert.

Der Lichtstrahl einer Lichtquelle L1 strahlt durch eine Kollimatorlinse K auf einen halbdurchlässigen Spiegel HS, der den Lichtstrahl rechtwinklig zu einer Objektivlinse O ablenkt, die ihn auf einen Aufzeichnungsträger AT fokussiert. Vom Aufzeichnungsträger AT, der den eingangs erwähnten Liesst-Effekt zeigt, wird der Lichtstrahl die Objektivlinse O durchstrahlend zurück zum halbdurchlässigen Spiegel HS reflektiert, den er geradlinig durchstrahlt, um von einer Zylinderlinse Z auf einem Photodetektor fokussiert zu werden.

Am Eingang der im vorhergehenden Absatz beschriebenen optischen Anordnung aus den Linsen und dem halbdurchlässigen Spiegel, der durch den Brennpunkt der Kollimatorlinse K festgelegt ist, ist eine Schiene S1 vorgesehen, auf der als Lichtquellen drei Laser L1, L2 und L3 sitzen, die Licht unterschiedlicher Wellenlänge erzeugen. Die Schiene S1 ist mittels eines Schrittmotors M1 in Pfeilrichtung bewegbar, damit jeder der drei Laser L1, L2 und L3 im Brennpunkt der Kollimatorlinse K positionierbar ist.

Ähnlich wie die drei Laser sind drei Photodetektoren P1, P2 und P3 unterschiedlicher spektraler Empfindlichkeit auf einer Schiene S2 angeordnet, die von einem Schrittmotor M2 in Pfeilrichtung verschiebbar ist, damit sich jeder Photodetektor im Brennpunkt der Zylinderlinse Z positionieren läßt.

Der Laser L1 und der Photodetektor P1 dienen z.B. zum Lesen der Daten. Wenn Daten auf dem Aufzeichnungsträger AT gelöscht werden, werden der Laser L2 in den Brennpunkt der Kollimatorlinse K und der Photodetektor P2 in den Brennpunkt der Zylinderlinse Z geschoben. Mittels des Photodetektors P2 kann das Löschen der Daten überwacht werden. Der Laser L2 bewirkt im Aufzeichnungsträger AT einen übergang vom einen Spin-Zustand, z.B. dem High-Spin-Zustand, in den anderen Spin-Zustand, den Low-Spin-Zustand.

Sollen Daten aufgezeichnet werden, so wird der Laser L3 mittels der Schiene S1 und des Schrittmotors M1 in den Brennpunkt der Kollimatorlinse K geschoben, während gleichzeitig der Photodetektor P3 mittels der Schiene S2 und des Schrittmotors F2 im Brennpunkt der Zylinderlinse Z positioniert wird. Mit Hilfe des Photodetektors P3 kann die Aufzeichnung der Daten überwacht werden.

Die spektrale Empfindlichkeit der drei Photodetektoren P1, P2 und P3 ist auf die Wellenlängen der drei Laser L1, L2 und L3 abgestimmt. Wenn auf die überwachung der Löschung und Aufzeichnung von Daten verzichtet wird, genügt ein Photodetektor.

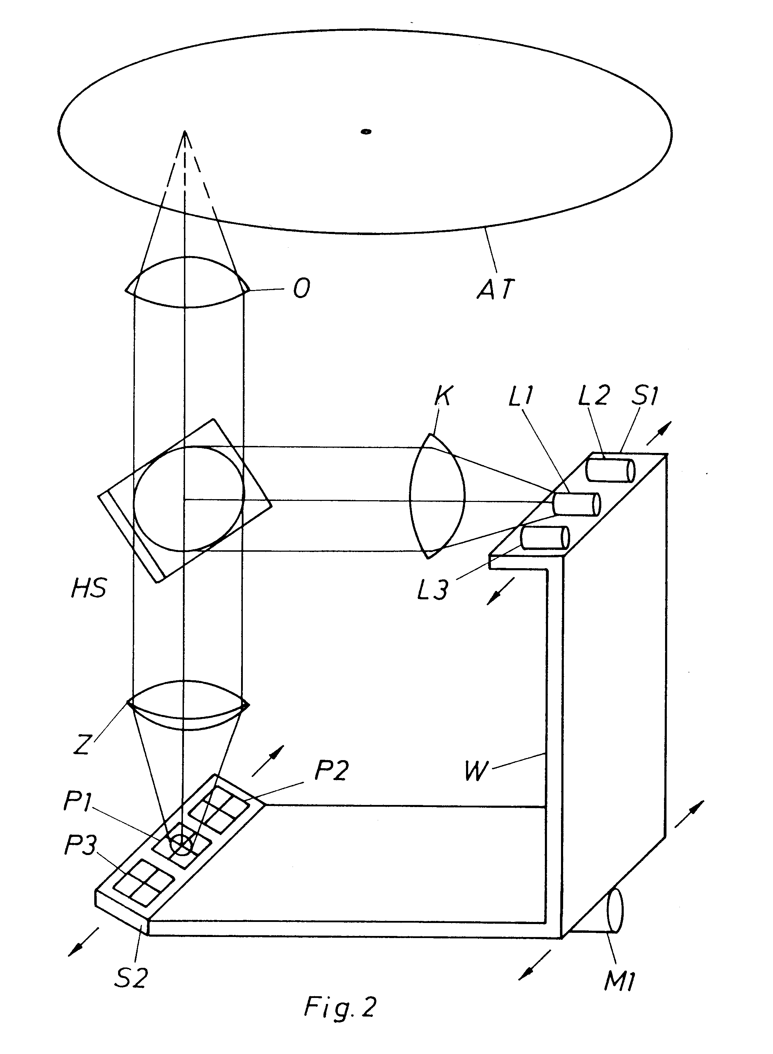

Bei einem zweiten Ausführungsbeispiel, dargestellt in Figur 2, entfällt einer der beiden Schrittmotoren, weil die Schiene S1 mittels eines Winkels W mit der Schiene S2 mechanisch gekoppelt ist. Wenn daher die eine Schiene bewegt wird, wird auch die andere Schiene mitbewegt.

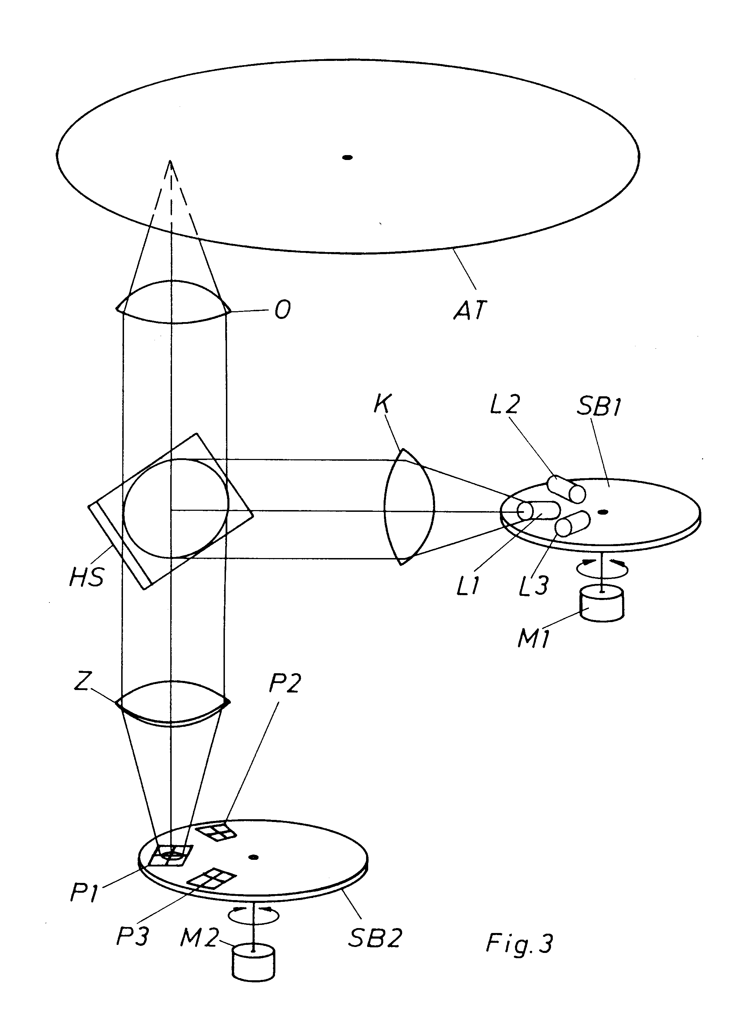

Die Laser L1, L2 und L3 können, wie ein drittes Ausführungsbeispiel in Figur 3 zeigt, auf einer Scheibe SB1 angeordnet sein. Ebenso können die Photodetektoren P1, P2 und P3 auf einer Scheibe SB2 sitzen. Jede Scheibe kann z.B. von einem Schrittmotor M1 und M2 angetrieben werden. Die beiden Scheiben können auch mechanisch z.B. mittels eines Riemens miteinander gekoppelt sein, so daß eine Drehung der einen Scheibe auch eine Drehung der anderen Scheibe bewirkt.

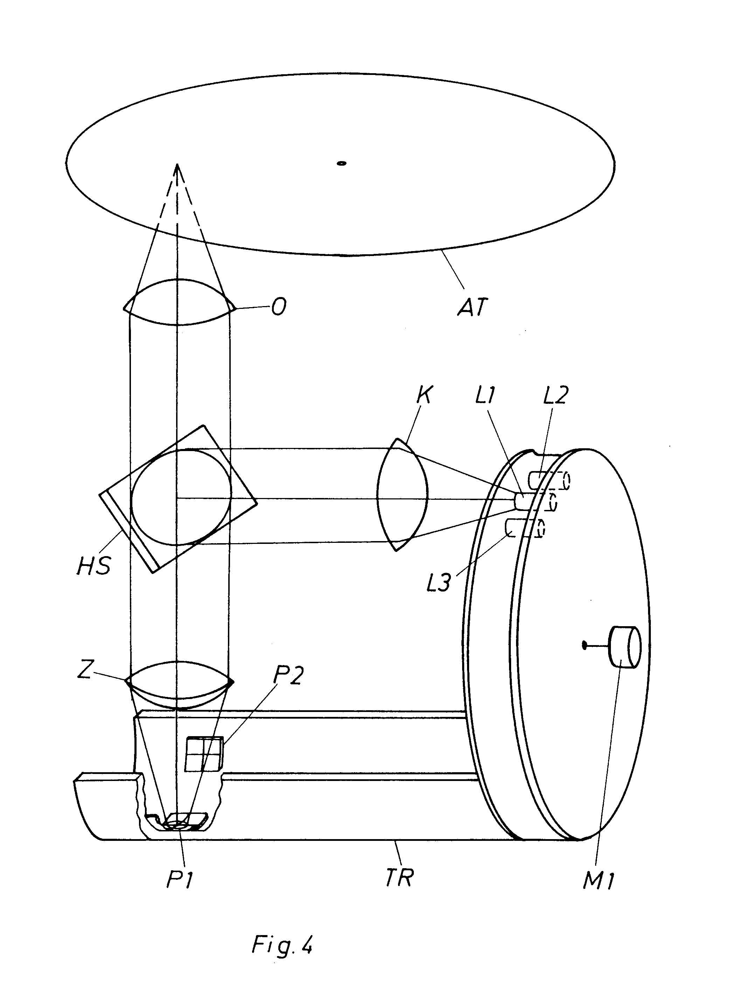

Anstelle auf einer Scheibe können die Laser L1, L2 und L3 sowie die Photodetektoren P1, P2 und P3 auf einer gemeinsamen Trommel TR befestigt sein, wie es bei einem vierten Ausführungsbeispiel, das in Figur 4 abgebildet ist, vorgesehen ist. Durch Drehen der Trommel TR, z.B. mittels eines Schrittmotors M1, werden die Laser und die Photodetektoren in den Brennpunkt der Kollimatorlinse K und der Zylinderlinse Z positioniert.

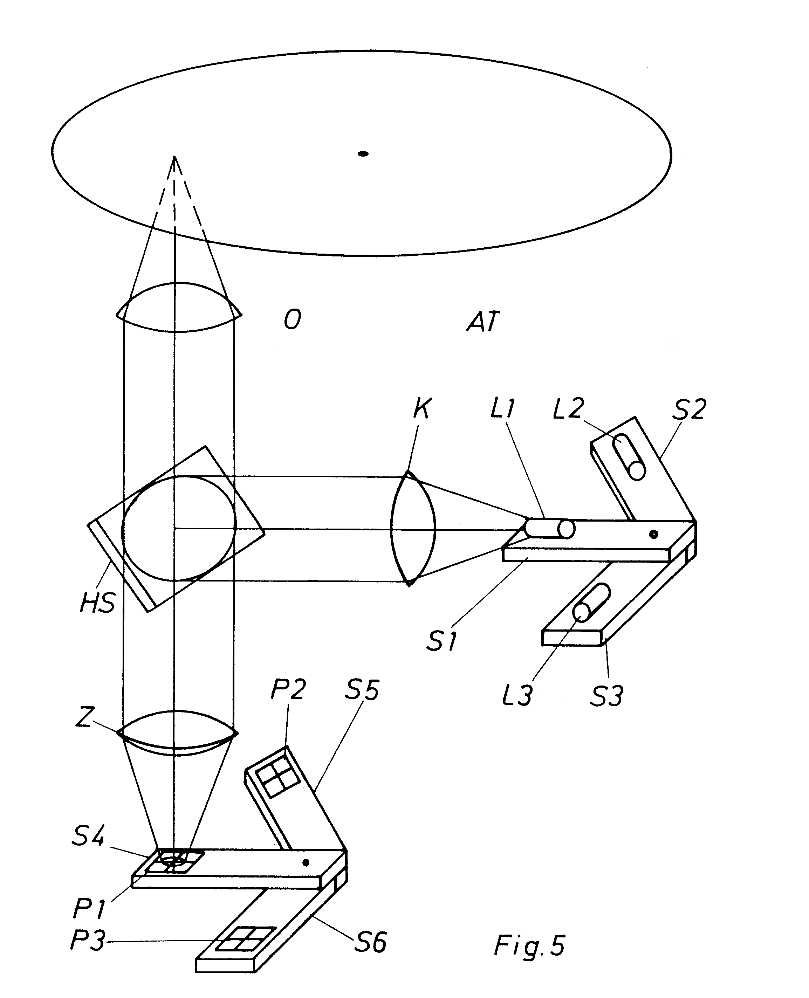

Bei einem fünften Ausführungsbeispiel, das in Figur 5 dargestellt ist, ist jeder Laser L1, L2 und L3 am Ende je eines Schwenkarms S1, S2 und S3 befestigt. Auch jeder Photodetektor P1, P2 und P3 ist am Ende je eines Schwenkarms S4, S5 und S6 angeordnet. Jeder Schwenkarm kann so geschwenkt werden, daß der auf ihm sitzende Laser oder Photodetektor in den Brennpunkt der Kollimator- bzw. der Zylinderlinse geschwenkt werden kann.

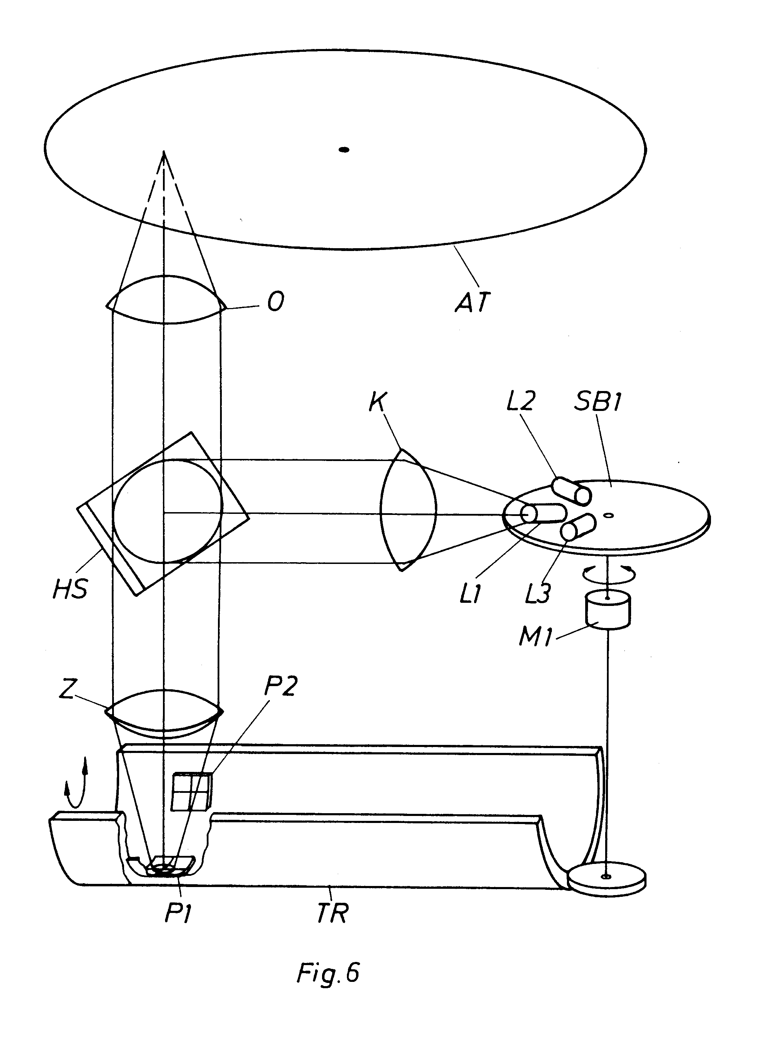

Es sind auch Kombinationen der angeführten Ausführungsbeispiele möglich. So können z.B. die Laser L1, L2 und L3 auf einer Scheibe SB1 sitzen, während die Photodetektoren P1, P2 und P3 auf der Innenseite einer aufgeschnittenen Trommel TR liegen, die mit der Scheibe SB1 mechanisch verbunden ist. Durch Drehen der Scheibe SB1 mittels eines Schrittmotors M1 werden daher sowohl die Laser als auch die Photodetektoren gleichzeitig in die Brennpunkte positioniert. Dieses sechste Ausführungsbeispiel zeigt die Figur 6.

Die Erfindung ist für Aufzeichnungs- und Wiedergabegeräte geeignet, die unter Ausnutzung des Liesst-Effektes Daten optisch von einem Aufzeichnungsträger lesen und auf dem Aufzeichnungsträger aufzeichnen.

**Patentansprüche**

1. Vorrichtung zum optischen Lesen und Aufzeichnen von Daten unter Ausnutzung des Liesst-Effektes, bei der ein Lichtstrahl einer Lichtquelle, die am Eingang einer optischen Anordnung vorgesehen ist, auf einen Aufzeichnungsträger (AT) mittels der optischen Anordnung fokussiert und vom Aufzeichnungsträger (AT) auf einen Photodetektor (P, P2, P3) reflektiert wird, der am Ausgang der optischen Anordnung vorgesehen ist, **dadurch gekenn-** **zeichnet,** daß wahlweise eine von mehreren Lichtquellen (L1, L2, L3) unterschiedlicher Wellenlänge vor dem Eingang der optischen Anordnung positionierbar ist, damit auf den Aufzeichnungsträger (AT) Licht unterschiedlicher Wellenlänge zum Lesen, Aufzeichnen oder Löschen von Daten gestrahlt werden kann.

2. Vorrichtung nach Anspruch 1, **dadurch gekennzeichnet,** daß die Lichtquellen (L1, L2, L3) auf einem gemeinsamen Träger sitzen, der bewegbar ist, um jede Lichtquelle (L1, L2, L3) vor dem Eingang der optischen Anordnung positionieren zu können.

3. Vorrichtung nach Anspruch 2, **dadurch gekennzeichnet,** daß die Lichtquellen (L1, L2, L3) auf einer Schiene (S1) sitzen, die vor dem Eingang der optischen Anordnung verschiebbar ist, um jede Lichtquelle (L1, L2, L3) vor dem Eingang der optischen Anordnung positionieren zu können.

4. Vorrichtung nach Anspruch 2, **dadurch gekennzeichnet,** daß die Lichtquellen (L1, L2, L3) auf einer drehbaren Scheibe (SB1) sitzen und daß durch Drehen der Scheibe (SB1) jede Lichtquelle (L1, L2, L3) vor dem Eingang der optischen Anordnung positionierbar ist.

5. Vorrichtung nach Anspruch 2, **dadurch gekennzeichnet,** daß die Lichtquellen (L1, L2, L3) auf dem Umfang einer Trommel (TR) sitzen und daß durch Drehen der Trommel (TR) jede Lichtquelle (L1, L2, L3) vor dem Eingang der optischen Anordnung positionierbar ist.

6. Vorrichtung nach Anspruch 1, **dadurch gekennzeichnet,** daß jede Lichtquelle (L1, L2, L3) auf je einem Schwenkarm (S1, S2, S3) sitzt, der vor den Eingang der optischen Anordnung schwenkbar ist, damit jede Lichtquelle (L1, L2, L3) vor dem Eingang der optischen Anordnung positionierbar ist.

7. Vorrichtung nach Anspruch 1, 2, 3, 4, 5 oder 6, **dadurch gekennzeichnet,** daß wahlweise einer von mehreren Photodetektoren (P1, P2, P3) unterschiedlicher spektraler Empfindlichkeit am Ausgang der optischen Anordnung positionierbar ist.

8. Vorrichtung nach Anspruch 7, **dadurch gekennzeichnet,** daß die Photodetektoren (P1, P2, P3) auf einem gemeinsamen Träger sitzen, der bewegbar ist, um jeden Photodetektor (P1, P2, P3) am Ausgang der optischen Anordnung positionieren zu können.

9. Vorrichtung nach Anspruch 8, **dadurch gekennzeichnet,** daß die Photodetektoren (P1, P2, P3) auf einer Schiene (S2) sitzen, die vor dem Ausgang der optischen Anordnung verschiebbar ist, um jeden Photodetektor (P1, P2, P3) vor dem Ausgang der optischen Anordnung positionieren zu können.

10. Vorrichtung nach Anspruch 8, **dadurch gekennzeichnet,** daß die Photodetektoren (P1, P2, P3) auf einer drehbaren Scheibe (SB2) sitzen und daß durch Drehen der Scheibe (SB2) jeder Photodetektor (P1, P2, P3) vor dem Ausgang der optischen Anordnung positionierbar ist.

11. Vorrichtung nach Anspruch 8, **dadurch gekennzeichnet,** daß die Photodetektoren (P1, P2, P3) auf dem Umfang einer Trommel (TR) sitzen und daß durch Drehen der Trommel (TR) jeder Photodetektor (P1, P2, P3) vor dem Ausgang der optischen Anordnung positionierbar ist.

12. Vorrichtung nach Anspruch 7, **dadurch gekennzeichnet,** daß jeder Photodetektor (P1, P2, P3) auf je einem Schwenkarm (S4, S5, S6) sitzt, der vor den Ausgang der optischen Anordnung schwenkbar ist, damit jeder Photodetektor (P1, P2, P3) vor dem Ausgang der optischen Anordnung positionierbar ist.

13. Vorrichtung nach Anspruch 8, 9, 10, 11 oder 12, **dadurch gekennzeichnet,** daß die Anordnung, auf der die Lichtquellen (L1, L2, L3) sitzen, mit der Anordnung, auf der die Photodetektoren (P1, P2, P3) sitzen, mechanisch gekoppelt ist.

14. Vorrichtung nach Anspruch 2, 3, 4, 7, 8, 9, 10, 11, 12 oder 13, **dadurch gekennzeichnet,** daß die Anordnung, auf der die Lichtquellen (L1, L2, L3) sitzen und/oder die Anordnung, auf der die Photodetektoren (P1, P2, P3) sitzen, mittels eines Schrittmotors (M1, M2) bewegt wird.

O

AT

K          L1          L2

HS

L3          S1          M1

Z

P2

P1

S2          P3          M2          Fig.1

Fig. 2

O

AT

K          L2          SB1

HS

L1          L3

M1

Z          P2

P1

P3     M2          SB2          Fig. 3

Fig. 4

Fig.5

Fig.6

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | EP-A-0 353 078   (QUANTEX CORPORATION) <br> * Seite 2, Spalte 2, Zeile 32 - Seite 3, Spalte 4, Zeile 57 * * Seite 8, Spalte 13, Zeile 26 - Seite 10, Spalte 17, Zeile 1 * * Figuren 7, 9, 10 * <br> – – – | 1 | G 11 B 7/00 <br> G 11 B 7/125 <br> G 11 B 7/08 |
| A | DE-A-3 741 910   (HITACHI LTD) <br> * Spalte 4, Zeile 22 - Spalte 6, Zeile 48 * * Figur 2 * <br> – – – | 1-14 | |
| A | US-A-4 720 825   (KOKADO) <br> * Spalte 4, Zeile 46 - Spalte 6, Zeile 58 * * Figuren 7, 9, 10 * <br> – – – – – | 1,8-12 | |

**RECHERCHIERTE SACHGEBIETE (Int. Cl.5)**

G 11 B

**Der vorliegende Recherchenbericht wurde für alle Patentansprüche erstellt**

| Recherchenort | Abschlußdatum der Recherche | Prüfer |
|---|---|---|
| Den Haag | 14 August 91 | BARBER I.G. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument
---------------------------------------------------------------
& : Mitglied der gleichen Patentfamilie, übereinstimmendes Dokument